# EUROPÄISCHE PATENTSCHRIFT

(11) **EP 1 190 166 B1**
(45) Veröffentlichungstag und Bekanntmachung des Hinweises auf die Patenterteilung: **22.03.2006**
(21) Anmeldenummer: 00990565.4
(22) Anmeldetag: 21.12.2000
(51) Int. Cl.: F02D 1/00

(54) **VERFAHREN UND VORRICHTUNG ZUM HOCHFAHREN EINES STEUERGERÄTS FÜR EIN KRAFTFAHRZEUG**
METHOD AND DEVICE FOR RUNNING UP A CONTROL UNIT FOR A MOTOR VEHICLE
PROCEDE ET DISPOSITIF DE DEMARRAGE D'UN APPAREIL DE COMMANDE POUR UN VEHICULE MOTORISE

(30) Priorität: 28.12.1999 DE 19963214
(43) Veröffentlichungstag der Anmeldung: 27.03.2002
(73) Patentinhaber: ROBERT BOSCH GMBH, 70442 Stuttgart (DE)
(72) Erfinder: AUE, Axel, 70825 Korntal-Muenchingen (DE)
(86) Internationale Anmeldenummer: PCT/DE2000/004582
(87) Internationale Veröffentlichungsnummer: WO 2001/048360

(56) Entgegenhaltungen:
- EP-A- 0 296 774
- EP-A- 0 435 082
- EP-A- 0 613 077
- DE-A- 4 429 633
- US-A- 5 265 018

## Beschreibung

### Stand der Technik

Die vorliegende Erfindung betrifft ein Verfahren und eine Vorrichtung zum Hochfahren eines Steuergeräts für ein Kraftfahrzeug aus einem zurückgesetzten Zustand. Das Steuergerät kann zur Steuerung/Regelung von bestimmten Funktionen und Vorgängen in dem Kraftfahrzeug, insbesondere zur Steuerung/Regelung der Brennkraftmaschine, des Getriebes, der Bremsen, der Heizung/Klimatisierung, eingesetzt werden.

Das Steuergerät kann durch verschiedene Maßnahmen in den zurückgesetzten Zustand gesetzt werden. Eine erste Möglichkeit ist bspw. eine Unterbrechung der Versorgungsspannung zu dem Steuergerät, indem ein Zündschlüssel oder ein Hauptschalter in eine ausgeschaltete Stellung gebracht wird. Diese Art des Zurücksetzens des Steuergeräts wird auch als Hardware-Reset bezeichnet. Zum Hochfahren des Steuergeräts aus dem zurückgesetzten Zustand wird der Zündschlüssel oder der Hauptschalter in eine eingeschaltete Stellung gebracht. Eine zweite Möglichkeit besteht darin, ein Zurücksetzen des Steuergeräts durch ein auf dem Steuergerät ablaufendes Steuerprogramm zu bewirken. Diese Art des Zurücksetzens des Steuergeräts wird als Software-Reset bezeichnet. Ein Software-Reset wird bspw. durchgeführt, falls während der Ausführung des Steuerprogramms ein Fehler auftritt. Aus dem zurückgesetzten Zustand fährt das Steuergerät nach der Ausgabe einer Fehlermeldung in der Regel automatisch wieder hoch. Als dritte Möglichkeit kann das Steuergerät in einen zurückgesetzten Zustand gebracht werden, wenn die Versorgungsspannung einen bestimmten Spannungsgrenzwert unterschreitet. Diese Art des Zurücksetzens des Steuergeräts wird auch als Unterspannungs-Reset bezeichnet. Sobald die Versorgungsspannung den Spannungsgrenzwert wieder überschritten hat, fährt das Steuergerät nach einem Unterspannungs-Reset in der Regel automatisch aus dem zurückgesetzten Zustand wieder hoch.

Zu einem Absinken der Versorgungsspannung unter den Spannungsgrenzwert und zur Auslösung eines Unterspannungs-Reset kann es bspw. während des Startvorgangs der Brennkraftmaschine eines Kraftfahrzeugs kommen. Zu Beginn des Startvorgangs wird ein Starter einer Kurbelwelle der Brennkraftmaschine angenähert und mit dieser in Eingriff gebracht, so dass eine Drehbewegung des Starters auf die Kurbelwelle und weiter auf die Brennkraftmaschine übertragen wird. Der Betrieb des Starters benötigt relativ viel Energie, so dass es zu einem Einbruch der Versorgungsspannung unter den Spannungsgrenzwert kommen kann.

Nach dem Stand der Technik wird der laufende Startvorgang durch einen Unterspannungs-Reset abgebrochen und nach dem Hochfahren des Steuergeräts ein neuer Startvorgang eingeleitet. D. h. der Starter wird am Ende des laufenden Startvorgangs von der Kurbelwelle wegbewegt und zu Beginn des neu eingeleiteten Startvorgangs erneut an die Kurbelwelle angenähert. Das führt zu einer zeitlichen Verzögerung zwischen den einzelnen aufeinander folgenden Startvorgängen und zu einer nicht unerheblichen Belastung der startaggregate, insbesondere der Kraftfahrzeugbatterie. Zudem ist das Startvermögen der Brennkraftmaschine bei einer Vielzahl von in einem zeitlichen Abstand aufeinander folgenden Startvorgängen relativ schlecht, so dass das Starten der Brennkraftmaschine relativ viel Zeit beansprucht.

Dabei zeigt die US 5,265,018 ein Getriebesteuersystem für ein Fahrzeug. Bei einem Start nach einem Reset des Mikroprozessors des Systems wird, sofern die Einsteilhebel der Getriebesteuerung nicht bewegt wurden, eine Kennung für die zuletzt eingestellte Position vor dem Reset verwendet, um die Getriebeübersetzung festzulegen. Es ist in dieser Druckschrift somit ein Verfahren zum Hochfahren eines Steuergerätes für ein Kraftfahrzeug aus einem zurückgesetzten Zustand offenbart, wobei geprüft wird, ob ein zu überwachender Vorgang vor dem Zurücksetzen eingeleitet war und der zu überwachende Vorgang fortgesetzt wird, falls er vor dem Zurücksetzen eingeleitet war.

Es ist deshalb die Aufgabe der vorliegenden Erfindung, ein Verfahren bzw. eine Vorrichtung zum Hochfahren eines Steuergeräts der genannten Art, bei der ein vor dem Zurücksetzen des Steuergeräts begonnener Vorgang durch das Zurücksetzen des Steuergeräts nicht abgebrochen und danach erneut eingeleitet wird, auszugestalten und weiterzubilden.

Zur Lösung dieser Aufgabe schlägt die Erfindung ausgehend von dem Verfahren zum Hochfahren eines Steuergeräts der eingangs genannten Art ein Verfahren bzw. eine Vorrichtung vor, welche gekennzeichnet ist durch die nachfolgenden Schritte:
- Überprüfen, ob ein zu überwachender Vorgang vor dem Zurticksetzen des Steuergeräts eingeleitet war;
- Fortsetzen des zu überwachenden Vorgangs, falls der zu überwachende Vorgang vor dem Zurücksetzen des Steuergeräts eingeleitet war; und
- Lesen eines Timerstandes aus einem Speicher, wobei zu Beginn des zu überwachenden Vorgangs der Stand eines Timers, der von dem Zurücksetzen des Steuergeräts unbeeinflusst bleibt, in dem Speicher abgelegt wird; und
- Vergleich der Differenz aus einem aktuellen Timerstand und dem gespeicherten Timerstand mit einem maximalen Timergrenzwert; und
- Fortsetzen des zu überwachenden Vorgangs, abhängig von dem Vergleich der Differenz aus dem aktuellen Timerstand und dem gespeicherten Timerstand mit dem maximalen Timergrenzwert.

### Vorteile der Erfindung

Der zu überwachende Vorgang kann bspw. der Startvorgang der Brennkraftmaschine eines Kraftfahrzeugs sein. Während des Startvorgangs der Brennkraftmaschine kann es zu einem Absinken der Versorgungsspannung unterhalb eines Spannungsgrenzwerts kommen, so dass ein Unterspannungs-Reset ausgelöst wird. Beim Hochfahren des Steuergeräts nach dem Unterspannungs-Reset wird dann gemäß der vorliegenden Erfindung zunächst überprüft, ob vor dem Unterspannungs-Reset des Steuergeräts ein Startvorgang eingeleitet war.

Falls dies der Fall ist, wird der vor dem Unterspannungs-Reset begonnene Startvorgang fortgesetzt. Dabei kommt es aufgrund des Unterspannungs-Resets lediglich zu einer kurzen Unterbrechung des Startvorgangs, ohne dass dieser jedoch abgebrochen und ein neuer eingeleitet wird. Insbesondere wird der Starter durch den Unterspannungs-Reset nicht von der Kurbelwelle der Brennkraftmaschine wegbewegt, sondern bleibt in Eingriff mit der Kurbelwelle. Zum Fortsetzen des Startvorgangs wird also lediglich der Starter erneut betätigt.

Falls vor dem Unterspannungs-Reset des Steuergeräts ein Startvorgang der Brennkraftmaschnie nicht eingeleitet war, wird nach dem Hochfahren des Steuergeräts ein neuer Startvorgang eingeleitet. Dazu wird zunächst der Starter der Kurbelwelle der Brennkraftmaschine angenähert und mit dieser in Eingriff gebracht, so dass eine Drehbewegung des Starters auf die Kurbelwelle und damit auf die Brennkraftmaschine übertragen wird. Anschließend wird der Starter betätigt.

Der Startvorgang einer Brennkraftmaschine ist hier beispielhaft als ein möglicher, zu überwachender Vorgang beschrieben. Ebenso ist der Unterspannungs-Reset als eine mögliche Art beschrieben, das Steuergerät eines Kraftfahrzeugs zurückzusetzen. Im Bereich von Kraftfahrzeugen sind jedoch eine Vielzahl anderer zu überwachender Vorgänge denkbar, die mit Hilfe des erfindungsgemäßen Verfahrens trotz eines Zurücksetzen des Steuergeräts nicht abgebrochen, sondern lediglich für eine kurze Zeit unterbrochen, und nach dem Hochfahren des Steuergeräts wieder fortgesetzt werden können. Als andere zu überwachende Vorgänge kommen sämtliche von dem Steuergerät gesteuerte bzw. geregelte Funktionen des Kraftfahrzeugs in Betracht. Insbesondere seien hier die Steuerung/Regelung des Getriebes, der Bremsen, der Lenkhilfe, des elektronischen Gaspedals, der Klimatisierung und Belüftung des Innenraums und des aktiven Fahrwerks genannt.

Bei einer hydraulischen oder pneumatischen Niveauregulierung eines Kraftfahrzeugs wäre es bspw. nicht wünschenswert, bei jedem Zurücksetzen des Steuergeräts die Niveauregulierung abzubrechen und das Druckniveau in der Hydraulik bzw. Pneumatik auf einen Ruhedruck herunterzufahren, das Kraftfahrzeug also abzusenken. Nach dem Hochfahren des Steuergeräts müsste dann erst wieder der Betriebsdruck aufgebaut werden, um das Kraftfahrzeug auf sein Betriebsniveau anzuheben. Mit dem erfindungsgemäßen Verfahren wird die Niveauregulierung durch das Zurücksetzen des Steuergeräts lediglich kurz unterbrochen und dann nach dem Hochfahren des Steuergeräts wieder dort fortgesetzt, wo sie unterbrochen wurde, d. h. trotz des Zurücksetzens des Steuergeräts bleibt das Druckniveau in der Hydraulik bzw. Pneumatik und das Betriebsniveau des Kraftfahrzeugs erhalten.

Gemäß einer vorteilhaften Weiterbildung der vorliegenden Erfindung wird vorgeschlagen, dass nach dem Überprüfen, ob der zu überwachende Vorgang vor dem Zurücksetzen des Steuergeräts eingeleitet war, die nachfolgenden Schritte ausgeführt werden:
- Lesen eines Timerstandes aus einem Speicher, wobei zu Beginn des zu überwachenden Vorgangs der Stand eines Timers, der von dem Zurücksetzen des Steuergeräts unbeeinflusst bleibt, in dem Speicher abgelegt wird;
- Vergleich der Differenz aus einem aktuellen Timerstand und dem gespeicherten Timerstand mit einem maximalen Timergrenzwert;
- Fortsetzen des zu überwachenden Vorgangs, falls die Differenz kleiner als oder kleiner gleich dem maximalen Timergrenzwert ist; und
- Einleiten des zu überwachenden Vorgangs, falls die Differenz größer als der maximale Timergrenzwert ist.

Gemäß dieser Weiterbildung verfügt das Steuergerät oder hat das Steuergerät Zugriff auf einen Timer, der von dem Zurücksetzen des Steuergeräts unbeeinflusst bleibt. Dazu ist der Timer bspw. direkt an die Versorgungsspannung angeschlossen. Der Stand des Timers wird zu Beginn des zu überwachenden Vorgangs ermittelt und in einem Speicher abgelegt. Beim Hochfahren des Steuergeräts wird der aktuelle Timerstand und der in dem Speicher abgelegte Timerstand gelesen. Aus den beiden gelesenen Timerständen wird eine Differenz gebildet. Die Differenz wird dann mit einem maximalen Timergrenzwert verglichen.

Bei der vorliegenden Weiterbildung wird davon ausgegangen, dass bei einer Differenz kleiner als oder kleiner gleich dem maximalen Timergrenzwert ein zu überwachender Vorgang so kurz vor dem Zurücksetzen des Steuergeräts begonnen wurde, dass der Vorgang fortgesetzt werden soll. Falls die Differenz dagegen größer als der maximale Timergrenzwert ist, bedeutet dies, dass der zu überwachende Vorgang zwar vor dem Zurücksetzen des Steuergeräts begonnen wurde, dass der Beginn des Vorgangs jedoch so weit zurückliegt, dass der Vorgang nicht fortgesetzt sondern neu eingeleitet werden soll. Der Timergrenzwert kann dem jeweils zu überwachenden Vorgang angepasst sein und für unterschiedliche Vorgänge unterschiedliche Werte annehmen. Vereinfacht gesagt, wird bei dieser Weiterbildung bei einem vor dem Zurücksetzen des Steuergeräts eingeleiteten Vorgang beim Hochfahren des Steuergeräts mit Hilfe eines Timers ermittelt, wieviel Zeit seit dem Beginn des zu überwachenden Vorgangs verstrichen ist, und in Abhängigkeit von der verstrichenen Zeit entschieden, ob der Vorgang fortgesetzt oder neu eingeleitet werden soll.

Der Timerstand kann zu Beginn eines zu überwachenden Vorgangs in einem beliebig ausgebildeten Speicher abgelegt werden. Für jeden zu überwachenden Vorgang wird ein eigener Timerstand in einem Speicher abgelegt. Gemäß einer bevorzugten Ausführungsform der vorliegenden Erfindung wird vorgeschlagen, dass der Timerstand zu Beginn des zu überwachenden Vorgangs in einem Festwertspeicher abgelegt wird. Der Festwertspeicher ist bspw. als ein Electrically Erasable Programmable ROM (EEPROM) oder als ein Flash-EEPROM ausgebildet. Die in dem Festwertspeicher abgelegten Daten bleiben auch dann erhalten, wenn der Festwertspeicher ohne jede Versorgungsspannung, also auch ohne Hilfsbatterie betrieben wird. Der Festwertspeicher wird also von dem Zurücksetzen des Steuergeräts nicht beeinflusst. Beim Hochfahren des Steuergeräts aus einem zurückgesetzten Zustand kann somit davon ausgegangen werden, dass die in dem Festwertspeicher abgelegten Daten gültig sind.

Gemäß einer alternativen Ausführungsform der vorliegenden Erfindung wird vorgeschlagen, dass der Timerstand zu Beginn des zu überwachenden Vorgangs in einem Schreib-Lese-Speicher mit wahlfreiem Zugriff abgelegt wird. Der Schreib-Lese-Speicher ist bspw. als ein Random-Access-Memory (RAM), insbesondere als ein Static RAM (SRAM) oder als ein Dynamic RAM (DRAM) ausgebildet. Ein RAM bleibt von dem Zurücksetzen des Steuergeräts nicht unbeeinflusst. Bei einem Abschalten der Versorgungsspannung sinkt die an dem RAM anliegende Spannung mit der Zeit langsam ab. Wenn die an dem RAM anliegende Spannung unter einen bestimmten Grenzwert absinkt, nimmt der RAM einen undefinierten Zustand an und die darin abgelegten Daten sind ungültig. Eine kurzzeitige Unterbrechung der Versorgungsspannung, wie sie bspw. beim Zurücksetzen und Wiederhochfahren eines Steuergeräts auftreten kann, führt in der Regel nicht zur Ungültigkeit der in dem RAM abgelegten Daten. Während der kurzen Unterbrechungsdauer der Versorgungsspannung sinkt die an dem RAM anliegende Spannung zwar etwas ab, sie erreicht in der Regel jedoch nicht den Spannungsgrenzwert, an dem die RAM-Zelle kippt, d. h. die in dem RAM abgelegten Daten ungültig werden.

Gemäß einer weiteren bevorzugten Ausführungsform der vorliegenden Erfindung wird vorgeschlagen, dass vor dem Lesen des Timerstandes aus dem Schreib-Lese-Speicher die Gültigkeit der in dem Schreib-Lese-Speicher abgelegten Daten überprüft wird. Beim Hochfahren des Steuergeräts wird also zunächst überprüft, ob die Versorgungsspannung so lange unterbrochen war, dass die an dem Schreib-Lese-Speicher (RAM) anliegende Spannung unter den Spannungsgrenzwert sinken konnte, bei dem die RAM-Zellen kippen. Das kann bspw. der Fall sein, wenn das Steuergerät durch Ausschalten des Zündschlüssels oder eines Hauptschalters in den zurückgesetzten Zustand gebracht wurde und erst nach einer längeren Wartezeit durch Einschalten des Zündschlüssels oder des Hauptschalters wieder hochgefahren wird. Zum Überprüfen der Gültigkeit der in dem Schreib-Lese-Speicher abgelegten Daten wird vorteilhafterweise das Powerfail-Verfahren eingesetzt. Bei dem Powerfail-Verfahren handelt es sich um ein aus dem Stand der Technik bekanntes Verfahren zum Überprüfen der Gültigkeit der in einem Schreib-Lese-Speicher (RAM) abgelegten Daten. Das Powerfail-Verfahren ist ausführlich in der DE 44 29 633 A1 beschrieben, auf die hier ausdrücklich Bezug genommen wird. Bei dem Powerfail-Verfahren wird eine Referenzzelle definiert, die eine geringere Datenverlustschwelle als die übrigen Speicherzellen des Schreib-Lese-Speichers aufweist. Zum Überprüfen der Gültigkeit der in den Speicherzellen des Schreib-Lese-Speichers abgelegten Daten wird die Referenzzelle daraufhin überwacht, ob sie gekippt ist. Falls die Referenzzelle gekippt ist, werden die Daten in den Speicherzellen aufgefrischt. Im Rahmen der vorliegenden Erfindung werden die in dem Schreib-Lese-Speicher abgelegten Daten für ungültig erklärt, falls die Referenzzelle gekippt ist.

Falls die in dem Schreib-Lese-Speicher abgelegten Daten ungültig sind, wird der Schreib-Lese-Speicher gemäß einer bevorzugten Ausführungsform der Erfindung initialisiert, und dann werden die in dem Schreib-Lese-Speicher abgelegten Daten für gültig erklärt. Anschließend wird der zu überwachende Vorgang eingeleitet. Zu Beginn des zu überwachenden Vorgangs wird, wie eingangs bereits erläutert, der Stand des Timers erfasst und in dem Speicher abgelegt.

Vorteilhafterweise wird das erfindungsgemäße Verfahren bzw. die Vorrichtung zur Überwachung des Startvorgangs einer Brennkraftmaschine verwendet. Insbesondere bei der Überwachung des Startvorgangs einer Brennkraftmaschine kommen die Vorteile des erfindungsgemäßen Verfahrens zum Tragen, da mit dem erfindungsgemäßen Verfahren ein batterie- und startaggregateschonender Startvorgang der Brennkraftmaschine ermöglicht wird.

### Zeichnung

Ein bevorzugtes Ausführungsbeispiel der vorliegenden Erfindung ist im Folgenden an Hand der Zeichnung näher erläutert. Es zeigt:

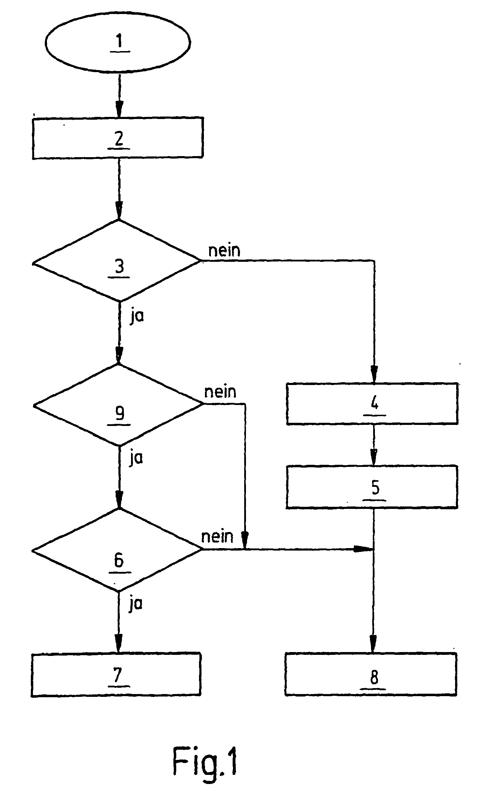

- Figur 1: ein Ablaufdiagramm eines erfindungsgemäßen Verfahrens gemäß einer bevorzugten Ausführungsform.

### Beschreibung des Ausführungsbeispiels

In Figur 1 ist eine bevorzugte Ausführungsform des erfindungsgemäßen Verfahrens zum Hochfahren eines Steuergeräts für ein Kraftfahrzeug aus einem zurückgesetzten Zustand dargestellt. Das Steuergerät kann zur Steuerung/Regelung von bestimmten Funktionen und Vorgängen in dem Kraftfahrzeug, insbesondere zur Steuerung/Regelung der Brennkraftmaschine, des Getriebes, der Bremsen, der Heizung/Klimatisierung, eingesetzt werden. Das erfindungsgemäße Verfahren zeichnet sich dadurch aus, dass beim Hochfahren des Steuergeräts der zu überwachende Vorgang, der vor dem Zurücksetzen des Steuergeräts eingeleitet war, nach dem Hochfahren des Steuergeräts nicht erneut eingeleitet, sondern dort fortgesetzt wird, wo er vor dem Zurücksetzen des Steuergeräts unterbrochen wurde.

Das in Figur 1 dargestellte Verfahren dient zur Überwachung des Startvorgangs einer Brennkraftmaschine eines Kraftfahrzeugs. Zu Beginn des Startvorgangs wird zunächst der Starter der Kurbelwelle angenähert und mit dieser in Eingriff gebracht. Durch Betätigen des Starters wird eine Drehbewegung des Starters auf die Kurbelwelle und weiter auf die Brennkraftmaschine übertragen. Aufgrund des Betriebs des Starters kann es zu einem Abfallen der Spannungsversorgung in dem Kraftfahrzeug kommen. Der Spannungsabfall kann so weit gehen, dass die Versorgungsspannung unter einen vorgegebenen Spannungsgrenzwert sinkt und aus Sicherheitsgründen ein Unterspannungs-Reset des Steuergeräts ausgeführt wird. Sobald die Versorgungsspannung wieder über den Spannungsgrenzwert ansteigt, wird das Steuergerät in der Regel automatisch wieder hochgefahren.

Nach dem Hochfahren des Steuergeräts muss ermittelt werden, ob der Startvorgang bereits vor dem Zurücksetzen des Steuergeräts eingeleitet war und nach dem Hochfahren des Steuergeräts fortgesetzt werden soll, oder ob der Startvorgang vor dem Zurücksetzen des Steuergeräts nicht eingeleitet war und ein neuer Startvorgang eingeleitet werden soll.

Zu Beginn des Startvorgangs wird der Stand eines Timers gelesen und in einem Speicher abgelegt (Timerstand T_sp). Der Timer bleibt von dem Zurücksetzen des Steuergeräts unbeeinflusst; er ist also bspw. direkt an die Versorgungsspannung angeschlossen. Der Speicher ist als ein Schreib-Lese-Speicher mit wahlfreiem Zugriff (RAM) ausgebildet.

Das Zurücksetzen des Steuergeräts ist in Figur 1 durch Funktionsblock 1 repräsentiert. Nach den Zurücksetzen des Steuergeräts wird in Funktionsblock 2 der aktuelle Stand des Timers gelesen (Timerstand T_akt). In einem nachfolgenden Abfrageblock 3 wird überprüft, ob die in dem RAM abgelegten Daten, also auch der Timerstand T_sp, gültig sind. Zum Überprüfen der Gültigkeit der in dem RAM abgelegten Daten wird das sog. Powerfail-Verfahren eingesetzt. Das Powerfail-Verfahren ist ausführlich in der DE 44 29 633 A1 beschrieben. Zum Überprüfen der Gültigkeit der in dem RAM abgelegten Daten mit dem Powerfail-Verfahren wird zunächst eine Referenzzelle definiert, die eine niedrigere Datenverlustschwelle aufweist als die übrigen Speicherzellen des RAM. Während die Speicherzellen bei einer Versorgungsspannung von bspw. 4,5 Volt im Normalzustand erst bei einem Absinken der Spannung auf etwa 0,6 bis 0,8 Volt kippen, kann die Referenzzelle bereits bei einem Spannungsgrenzwert von etwa 1,5 bis 2,5 Volt kippen.

Zum Überprüfen der Gültigkeit der in dem RAM abgelegten Daten wird überprüft, ob die Referenzzelle gekippt ist. Falls das der Fall ist, wird davon ausgegangen, dass die in dem RAM abgelegten Daten ungültig sind. In diesem Fall wird zu einem Funktionsblock 4 verzweigt, wo der RAM initialisiert wird. Anschließend wird der RAM bzw. werden die in dem RAM nach der Initialisierung enthaltenen Daten in Funktionsblock 5 für gültig erklärt. Dann wird in einem Funktionsblock 8 ein neuer Startvorgang eingeleitet. Zu Beginn des neuen Startvorgangs wird der Stand des Timers gelesen und in dem RAM als abgespeicherter Timerstand T_sp abgelegt.

Falls die Überprüfung in Abfrageblock 3 ergibt, dass die in dem RAM abgelegten Daten gültig sind, wird zu einem Abfrageblock 9 verzweigt. Dort wird überprüft, ob vor dem Zurücksetzen des Steuergeräts ein Startvorgang eingeleitet war. Es ist denkbar, dass Informationen darüber ebenfalls in dem RAM abgelegt sind. In dem Abfrageblock 9 werden diese Informationen dann aus dem RAM gelesen und ausgewertet. Falls vor dem Zurücksetzen des Steuergeräts kein Startvorgang eingeleitet war, wird zu dem Funktionsblock 8 verzweigt und ein neuer Startvorgang eingeleitet.

Falls dagegen vor dem Zurücksetzen des Steuergeräts ein Startvorgang eingeleitet war, wird zu einem Abfrageblock 6 verzweigt. Dort wird überprüft, ob der Startvorgang vor dem Zurücksetzen des Steuergeräts eingeleitete Startvorgang vor zu langer Zeit eingeleitet wurde und ob ein Fortsetzen des Startvorgangs Sinn macht. Dazu wird zunächst der Timerstand T_sp aus dem RAM gelesen und dann überprüft, ob die Differenz des aktuellen Timerstandes T_akt und des abgespeicherten Timerstandes T_sp kleiner als oder kleiner gleich einem maximalen Timergrenzwert ist. Falls dem so ist, wird in Funktionsblock 7 verzweigt, wo der vor dem Zurücksetzen des Steuergeräts eingeleitete Startvorgang fortgesetzt wird. Der Timergrenzwert kann für jeden zu überwachenden Vorgang unterschiedlich gewählt werden. Für jeden zu überwachenden Vorgang ist ein eigener Timerstand T_sp abgespeichert.

Falls jedoch die Differenz aus dem aktuellen Timerstand T_akt und dem abgespeicherten Timerstand T_sp größer als der maximale Timergrenzwert ist, wird davon ausgegangen, dass es keinen Sinn mehr macht den vor dem Zurücksetzen des Steuergeräts eingeleiteten Startvorgang fortzusetzen, da er bereits vor zu langer Zeit eingeleitet wurde. Es wird zu dem Funktionsblock 8 verzweigt, wo ein neuer Startvorgang eingeleitet wird. Zu Beginn des neuen Startvorgangs wird wiederum der Stand des Timers gelesen und in dem RAM als neuer abgespeicherter Timerstand T_sp abgelegt.

## Patentansprüche

1. verfahren zum Hochfahren eines Steuergeräts für ein Kraftfahrzeug aus einem zurückgesetzten Zustand, mit den nachfolgenden Schritten:
- überprüfen, ob ein zu überwachender Vorgang vor dem Zurücksetzen des Steuergeräts eingeleitet war (9);
- Fortsetzen des zu überwachenden Vorgangs (7), falls der zu überwachende Vorgang vor dem Zurücksetzen des Steuergeräts eingeleitet war; **gekennzeichnet durch** die weiteren Schritte:
- Lesen eines Timerstandes (T_sp) aus einem Speicher, wobei zu Beginn des zu überwachenden Vorgangs der Stand (T_sp) eines Timers, der von dem Zurücksetzen des Steuergeräts unbeeinflusst bleibt, in dem Speicher abgelegt wird; und
- Vergleich der Differenz aus einem aktuellen Timerstand (T_akt) und dem gespeicherten Timerstand (T_sp) mit einem maximalen Timergrenzwert; und
- Fortsetzen des zu überwachenden Vorgangs (7), abhängig von dem Vergleich der Differenz aus dem aktuellen Timerstand (T_akt) und dem gespeicherten Timerstand (T_sp) mit dem maximalen Timergrenzwert.

2. Verfahren nach Anspruch 1, **dadurch gekennzeichnet, dass** zusätzlich ein weiterer Schritt ausgeführt wird, nämlich:
- Einleiten des zu überwachenden Vorgangs (8), falls der zu überwachende Vorgang vor dem Zurücksetzen des Steuergeräts nicht eingeleitet war, sofern der zu überwachende Vorgang einzuleiten ist.

3. Verfahren nach Anspruch 1 oder 2, **dadurch gekennzeichnet, dass** nach dem Überprüfen, ob der zu überwachende Vorgang vor dem Zurücksetzen des Steuergeräts eingeleitet war, auch die nachfolgenden Schritte ausgeführt werden:
- Fortsetzen des zu überwachenden Vorgangs (7), falls die Differenz kleiner als oder kleiner gleich dem maximalen Timergrenzwert ist; und
- Einleiten des zu überwachenden Vorgangs (8), falls die Differenz größer als der maximale Timergrenzwert ist.

4. Verfahren nach Anspruch 1 oder 2 oder 3, **dadurch gekennzeichnet, dass** der Timerstand (T_sp) zu Beginn des zu überwachenden Vorgangs in einem Festwertspeicher abgelegt wird.

5. Verfahren nach Anspruch 1 oder 2 oder 3, **dadurch gekennzeichnet, dass** der Timerstand (T_sp) zu Beginn des zu überwachenden Vorgangs in einem Schreib-Lese-Speicher mit wahlfreiem Zugriff abgelegt wird.

6. Verfahren nach Anspruch 5, **dadurch gekennzeichnet, dass** vor dem Lesen des Timerstandes (T_sp) aus dem Schreib-Lese-Speicher die Gültigkeit der in dem Schreib-Lese-Speicher abgelegten Daten überprüft wird (3).

7. Verfahren nach Anspruch 6, **dadurch gekennzeichnet, dass** zum Überprüfen der Gültigkeit der in dem Schreib-Lese-Speicher abgelegten Daten das Powerfail-Verfahren eingesetzt wird (3).

8. Verfahren nach Anspruch 5 oder 6, **dadurch gekennzeichnet, dass** der Schreib-Lese-Speicher initialisiert wird (4), falls die in dem Schreib-Lese-Speicher abgelegten Daten ungültig sind, und dann die in dem Schreib-Lese-Speicher abgelegten Daten für gültig erklärt werden (5).

9. Verwendung des Verfahrens nach einem der Ansprüche 1 bis 8 zur Überwachung des Startvorgangs einer Brennkraftmaschine.

10. Vorrichtung zum Hochfahren eines Steuergeräts für ein Kraftfahrzeug aus einem zurückgesetzten Zustand, mit darin enthaltenen Mitteln, die die nachfolgenden Schritte ausführen:
- Überprüfen, ob ein zu überwachender Vorgang vor dem Zurücksetzen des Steuergeräts eingeleitet war (9);
- Fortsetzen des zu überwachenden Vorgangs (7), falls der zu überwachende Vorgang vor dem Zurücksetzen des Steuergeräts eingeleitet war, **dadurch gekennzeichnet, dass** die Mittel weiterhin derart ausgestaltet sind, dass diese die folgenden Schritte ausführen:
- Lesen eines Timerstandes (T_sp) aus einem Speicher, wobei zu Beginn des zu überwachenden Vorgangs der Stand (T_sp) eines Timers, der von dem Zurücksetzen des Steuergeräts unbeeinflusst bleibt, in dem Speicher abgelegt wird; und
- Vergleich der Differenz aus einem aktuellen Timerstand (T_akt) und dem gespeicherten Timerstand (T_sp) mit einem maximalen Timergrenzwert; und
- Fortsetzen des zu überwachenden Vorgangs (7), abhängig von dem Vergleich der Differenz aus dem aktuellen Timerstand (T_akt) und dem gespeicherten Timerstand (T_sp) mit dem maximalen Timergrenzwert.

11. Vorrichtung nach Anspruch 10, **dadurch gekennzeichnet, dass** die Mittel weiterhin derart ausgebildet sind, um folgenden Schritt auszuführen:
- Einleiten des zu überwachenden Vorgangs (8), falls der zu überwachende Vorgang vor dem Zurücksetzen des Steuergeräts nicht eingeleitet war.

12. Vorrichtung nach Anspruch 10 oder 11, **dadurch gekennzeichnet, dass** die Mittel derart ausgestaltet sind, dass nach dem Überprüfen, ob der zu überwachende Vorgang vor dem Zurücksetzen des Steuergeräts eingeleitet war, auch die nachfolgenden Schritte ausgeführt werden:
- Fortsetzen des zu überwachenden Vorgangs (7), falls die Differenz kleiner als oder kleiner gleich dem maximalen Timergrenzwert ist; und
- Einleiten des zu überwachenden Vorgangs (8), falls die Differenz größer als der maximale Timergrenzwert ist.

## Claims

1. Method for powering up a control unit for a motor vehicle from a reset state, having the following steps:
- checking whether a process to be monitored was initiated before the resetting of the control unit (9);
- continuation of the process (7) to be monitored if the process to be monitored was initiated before the resetting of the control unit; **characterized by** the further steps:
- reading of a timer reading (T_sp) from a memory, with the reading (T_sp) of a timer which remains uninfluenced by the resetting of the control unit being stored in the memory at the start of the process to be monitored; and
- comparison of the difference between a current timer reading (T_akt) and the stored timer reading (T_sp) with a maximum timer limiting value; and
- continuation of the process (7) to be monitored, as a function of the comparison of the difference between the current timer reading (T_akt) and the stored timer reading (T_sp) with the maximum timer limiting value.

2. Method according to Claim 1, **characterized in that** a further step is additionally carried out, specifically:
- initiation of the process (8) to be monitored if the process to be monitored was not initiated before the resetting of the control unit if the process to be monitored is to be initiated.

3. Method according to Claim 1 or 2, **characterized in that** after the checking as to whether the process to be monitored was initiated before the resetting of the control unit, the following steps are also carried out:
- continuation of the process (7) to be monitored if the difference is less than or less than or equal to the maximum timer limiting value; and
- initiation of the process (8) to be monitored if the difference is greater than the maximum timer limiting value.

4. Method according to Claim 1, 2 or 3, **characterized in that** the timer reading (T_sp) is stored in a read only memory at the start of the process to be monitored.

5. Method according to Claim 1, 2 or 3, **characterized in that** the timer reading (T_sp) is stored in a read-write memory with random access at the start of the process to be monitored.

6. Method according to Claim 5, **characterized in that**, before the timer reading (T_sp) is read out of the read-write memory, the validity of the data stored in the read-write memory is checked (3).

7. Method according to Claim 6, **characterized in that** the power fail method is used (3) to check the validity of the data stored in the read-write memory.

8. Method according to Claim 5 or 6, **characterized in that** the read-write memory is initialized (4) if the data stored in the read-write memory is invalid, and the data stored in the read-write memory is then declared (5) valid.

9. Use of the method according to one of Claims 1 to 8 for monitoring the starting process of an internal combustion engine.

10. Device for powering up a control unit for a motor vehicle from a reset state, having means contained therein which carry out the following steps:
- checking whether a process to be monitored was initiated before the resetting of the control unit (9);
- continuation of the process (7) to be monitored if the process to be monitored was initiated before the resetting of the control unit, **characterized in that** the means are also configured in such a way that they carry out the following steps:
- reading of a timer reading (T_sp) from a memory, with the reading (T_sp) of a timer which remains uninfluenced by the resetting of the control unit being stored in the memory at the start of the process to be monitored; and
- comparison of the difference between a current timer reading (T_akt) and the stored timer reading (T_sp) with a maximum timer limiting value; and
- continuation of the process (7) to be monitored, as a function of the comparison of the difference between the current timer reading (T_akt) and the stored timer reading (T_sp) with the maximum timer limiting value.

11. Device according to Claim 10, **characterized in that** the means are also designed to carry out the following step:
- initiation of the process (8) to be monitored if the process to be monitored was not initiated before the resetting of the control unit.

12. Device according to Claim 10 or 11, **characterized in that** the means are configured in such a way that after the checking as to whether the process to be monitored was initiated before the resetting of the control unit, the following steps are also carried out:
- continuation of the process (7) to be monitored if the difference is less than or less than or equal to the maximum timer limiting value; and
- initiation of the process (8) to be monitored if the difference is greater than the maximum timer limiting value.

## Revendications

1. Procédé de démarrage d'un appareil de commande pour un véhicule à moteur venant d'être réinitialisé, présentant les étapes suivantes :
- vérification pour savoir si une opération à surveiller a été lancée avant la réinitialisation de l'appareil de commande (9) ;
- poursuite de l'opération à surveiller (7), au cas où cette opération a été lancée avant la réinitialisation de l'appareil de commande,
**caractérisé par**
les étapes supplémentaires de :
- lecture dans une mémoire d'un état d'horloge (T_sp), où l'état (T_sp) d'une horloge, qui n'est pas modifiée par la réinitialisation de l'appareil de commande, est mémorisé dans la mémoire lors du démarrage de l'opération à surveiller,
- comparaison de la différence entre un état d'horloge actuel (T_akt) et l'état d'horloge mémorisé (T_sp) avec une valeur limite d'horloge maximale, et
- poursuite de l'opération à surveiller (7) en fonction de la comparaison de la différence entre l'état d'horloge actuel (T_akt) et l'état d'horloge mémorisé (T_sp) avec la valeur limite d'horloge maximale.

2. Procédé selon la revendication 1,
**caractérisé en ce qu'**
une étape supplémentaire est en outre exécutée, à savoir :
- lancement de l'opération à surveiller (8), au cas où cette opération n'a pas été lancée avant la réinitialisation de l'appareil de commande, dans la mesure où elle est à lancer.

3. Procédé selon la revendication 1 ou 2,
**caractérisé en ce qu'**
après avoir vérifié si l'opération à surveiller a été lancée avant la réinitialisation de l'appareil de commande, les étapes suivantes sont également exécutées :
- poursuite de l'opération à surveiller (7), au cas où la différence est inférieure ou égale, à la valeur limite maximale d'horloge, et
- lancement de l'opération à surveiller (8), au cas où la différence est supérieure à la valeur limite maximale d'horloge.

4. Procédé selon la revendication 1, 2 ou 3,
**caractérisé en ce que**
l'état d'horloge (T_sp) est mémorisé dans une mémoire morte au démarrage de l'opération à surveiller.

5. Procédé selon la revendication 1, 2 ou 3,
**caractérisé en ce que**
l'état d'horloge (T_sp) est mémorisé dans une mémoire de lecture-écriture à accès aléatoire au démarrage de l'opération à surveiller.

6. Procédé selon la revendication 5,
**caractérisé en ce qu'**
avant la lecture de l'état d'horloge (T_sp) dans la mémoire de lecture-écriture, la validité des données mémorisées dans la mémoire de lecture-écriture est vérifiée (3) .

7. Procédé selon la revendication 6,
**caractérisé en ce que**
pour vérifier la validité des données mémorisées dans la mémoire de lecture-écriture, le procédé de la panne de courant est utilisé (3).

8. Procédé selon la revendication 5 ou 6,
**caractérisé en ce que**
la mémoire de lecture-écriture est initialisée (4) au cas où les données mémorisées dans la mémoire de lecture-écriture ne sont pas valables, et ensuite, les données mémorisées dans la mémoire de lecture-écriture sont déclarées valables (5).

9. Utilisation du procédé selon l'une quelconque des revendications 1 à 8 pour surveiller l'opération de démarrage d'un moteur à combustion interne.

10. Dispositif de démarrage d'un appareil de commande pour un véhicule à moteur venant d'être réinitialisé, comprenant des moyens qui exécutent les étapes suivantes :
- vérification pour savoir si une opération à surveiller a été lancée avant la réinitialisation de l'appareil de commande (9) ;
- poursuite de l'opération à surveiller (7), au cas où cette opération a été lancée avant la réinitialisation de l'appareil de commande,
**caractérisé en ce que**
les moyens sont configurés de façon à ce qu'ils exécutent les étapes suivantes :
- lecture dans une mémoire d'un état d'horloge (T_sp), où l'état (T_sp) d'une horloge, qui n'est pas modifiée par la réinitialisation de l'appareil de commande, est mémorisé dans la mémoire au démarrage de l'opération à surveiller,
- comparaison de la différence entre un état d'horloge actuel (T_akt) et l'état d'horloge mémorisé (T_sp) avec une valeur limite d'horloge maximale, et
- poursuite de l'opération à surveiller (7) en fonction de la comparaison de la différence entre l'état d'horloge actuel (T_akt) et l'état d'horloge mémorisé (T_sp) avec la valeur limite d'horloge maximale.

11. Dispositif selon la revendication 10,
**caractérisé en ce que**
les moyens sont de plus configurés de façon à exécuter l'étape suivante :
- lancement de l'opération à surveiller (8), au cas où cette opération n'a pas été lancée avant la réinitialisation de l'appareil de commande.

12. Dispositif selon la revendication 10 ou 11,
**caractérisé en ce que**
les moyens sont de plus configurés de façon à ce qu'après avoir vérifié si l'opération à surveiller a été lancée avant la réinitialisation de l'appareil de commande, les étapes suivantes sont également exécutées :
- poursuite de l'opération à surveiller (7), au cas où la différence est inférieure ou égale, à la valeur limite d'horloge maximale, et
- lancement de l'opération de surveillance (8), au cas où la différence est supérieure à la valeur limite d'horloge maximale.
